# EUROPÄISCHE PATENTSCHRIFT

(11) **EP 0 751 306 B1**
(45) Veröffentlichungstag und Bekanntmachung des Hinweises auf die Patenterteilung: **27.11.2002**
(21) Anmeldenummer: 96107429.1
(22) Anmeldetag: 10.05.1996
(51) Int. Cl.: F16B 12/16, A47B 95/00, F16B 12/20

(54) **Verbindungsbeschlag**
Connecting fitting
Ferrure d'assemblage

(30) Priorität: 28.06.1995 DE 29510504 U
(43) Veröffentlichungstag der Anmeldung: 02.01.1997
(73) Patentinhaber: Arturo Salice S.p.A., I-22060 Novedrate (Como) (IT)
(72) Erfinder:
(74) Vertreter: Gossel, Hans K., Dipl.-Ing.

(56) Entgegenhaltungen:
- DE-A- 2 919 769
- DE-U- 29 504 622
- FR-A- 2 445 461

## Beschreibung

Die Erfindung betrifft einen Verbindungsbeschlag zum lösbaren Verbinden von Möbelteilen.

Verbindungsbeschläge zum lösbaren Verbinden von Möbelteilen sind in unterschiedlichen Ausführungsformen bekannt. Derartige Verbindungsbeschläge weisen meist einen komplizierten Aufbau auf. Darüber hinaus lassen sie sich grundsätzlich nur mit Hilfe von besonderen Werkzeugen montieren.

Aufgabe der Erfindung ist es daher, einen Verbindungsbeschlag zu schaffen, der einen einfachen Aufbau besitzt und sich in einfacher Weise ohne besondere Werkzeuge im wesentlichen spielfrei nur von Hand montieren läßt.

Erfindungsgemäß wird diese Aufgabe durch einen Verbindungsbeschlag zum lösbaren Verbinden von Möbelteilen gelöst, der aus zwei in Aussparungen zweier Möbelteile einsetzbaren und in diesen befestigbaren, topfförmigen Gehäusen, die in ihren einander zugewandten Wandungen mit in ihrer Montagestellung fluchtenden Bohrungen versehen sind, und aus einem in der Bohrung des einen topfförmigen Gehäuses gehalterten und mit einem radialen Betätigungshebel versehenen Bolzen besteht, dessen vorderer, die Bohrung überragender, zapfenförmiger Endbereich in die Bohrung des anderen topfförmigen Gehäuses einführbar und derart mit schneidenden Gewindestegen versehen ist, daß der zapfenförmige Endbereich durch etwa eine Vierteldrehung in der Bohrung des anderen topfförmigen Gehäuses verriegelbar ist.

Der erfindungsgemäße Verbindungsbeschlag zeichnet sich durch einen besonders einfachen Aufbau aus. Er besitzt nur ein einziges bewegliches Teil, nämlich den in einem topfförmigen Gehäuse des Verbindungsbeschlags drehbar gelagerten Bolzen, der verriegelnd mit seinem vorderen Endbereich in die Bohrung des anderen topfförmigen Gehäuses eingreift. Der erfindungsgemäße Verbindungsbeschlag läßt sich ohne ein zusätzliches Werkzeug nur von Hand montieren, da zur Verriegelung der beiden Möbelteile nach dem Einführen des mit schneidenden Gewindestegen versehenen zapfenförmigen Endbereichs des Bolzens in die Bohrung des anderen Gehäuses nur der den Bolzen verdrehende Hebel von Hand umgelegt werden muß. Bei diesem Umlegen führt der Bolzen eine Drehung aus, die dazu führt, daß der mit schneidenden Gewindestegen versehene zapfenförmige Endbereich des Bolzens form- und kraftschlüssig an der Wandung der Bohrung des anderen Gehäuses angreift. Da die Verriegelung durch selbstschneidende Gewindestege erfolgt, werden die miteinander zu verbindenden Möbelteile durch die Drehung des Bolzens in die Verriegelungsstellung auch spannend gegeneinander gezogen, so daß ein etwa vorhandenes Spiel zwischen den miteinander zu verbindenden Möbelteilen beseitigt werden kann.

Nach einer bevorzugten Ausführungsform ist vorgesehen, daß die Bohrungen zylindrische Fortsätze der Gehäusewandungen durchsetzen, die von einander entgegengesetzten Seiten her in eine ihren Durchmessern angepaßte Durchgangsbohrung einer Wand einsetzbar sind, deren Länge etwa gleich oder größer ist als die Summe der Längen der Fortsätze. Diese Ausgestaltung ermöglicht es, einfach und schnell Borde, Böden oder der Unterteilung dienende Platten an einer Zwischenwandung zu befestigen. Um die plattenförmigen Möbelteile an einer Zwischenwand zu befestigen, werden diese an ihrem Randbereich mit den Aussparungen versehen, in die die topfförmigen Gehäuse eingesetzt werden. Zweckmäßigerweise sind die Fortsätze an schmalen, mit den Stirnkanten der Möbelbretter fluchtenden Stirnseiten der Gehäuse angeordnet. Diese Anordnung wird dadurch erreicht, daß die Aussparungen die Stirnkanten der Möbelbretter anschneiden, so daß die Stirnseiten der Gehäuse in diesen Anschnitten liegen.

Nach einer anderen bevorzugten Ausführungsform ist vorgesehen, daß die topfförmigen Gehäuse in Aussparungen zweier rechtwinkelig miteinander zu verbindender Möbelteile eingesetzt und unmittelbar miteinander verriegelbar sind. Diese Ausgestaltung ermöglicht den Anschluß von Böden oder Zwischenplatten an eine endseitige vertikale Möbelwand, beispielsweise eine Seitenwand eines Schrankes.

Zweckmäßigerweise ist nur das den Bolzen halternde Gehäuse mit einem zylindrischen Fortsatz und das andere Gehäuse mit einer komplementären, den zylindrischen Fortsatz aufnehmenden Sacklochbohrung versehen, in deren Grund die Bohrung mündet.

In weiterer Ausgestaltung der Erfindung ist vorgesehen, daß der mit einem selbstschneidenden Gewinde versehene zapfenförmige Endbereich des Bolzens auf gegenüberliegenden Seiten abgeflacht und die Bohrung des anderen Gehäuses ein dem Zapfenhüllprofil im wesentlichen angepaßtes rechteckiges Profil aufweist. Da der mit einem selbstschneidenden Gewinde versehene zapfenförmige Endbereich auf gegenüberliegenden Seiten bis etwa zu dem Bereich seines Kernschaftes abgeflacht ist, läßt sich dieser Endbereich frei in die entsprechend profilierte Bohrung des anderen Gehäuses bis zum Anschlag einschieben. Durch Umlegen des Betätigungshebels wird dann der Bolzen etwa um eine Vierteldrehung gedreht, so daß sich die stehengebliebenen Teile der Gewindegänge in die Wandung der Bohrung des anderen Teils einschneiden und die zylindrischen Fortsätze in der beschriebenen Weise gegeneinander ziehen.

Der radiale Hebel kann einstückig (materialhomogen) mit dem Bolzen ausgebildet sein. Der Bolzen mit Hebel und zapfenförmigem Endbereich mit selbstschneidendem Gewinde bestehen zweckmäßigerweise aus Metalldruckguß.

Der radiale Hebel kann abgekröpft sein.

Zweckmäßigerweise ist das den Bolzen halternde Gehäuse in seinem mittleren Bereich mit einer die Bohrung durchsetzenden, nach außen hin offenen Aussparung versehen, in der der radiale Hebel angeordnet ist. Die Breite dieser Aussparung bestimmt den Winkel, über den sich der Hebel zwischen seiner Montagestellung und seiner verriegelten Stellung verschwenken läßt. Die Aussparung ist zweckmäßigerweise in der Mitte des Gehäuses angebracht, so daß sie die in den diese begrenzenden, gegenüberliegenden Wänden des Gehäuses befindlichen Bohrungen unterbricht.

Nach einer bevorzugten Ausführungsform ist vorgesehen, daß beide Bohrungsabschnitte mit Gewindegängen für Gewindestege des Bolzens versehen sind. Diese Ausgestaltung führt dazu, daß der Bolzen bei der Drehung aus der Montagestellung in seine verriegelte Stellung eine die miteinander zu verbindenden Teile verspannende Einzugsbewegung in das Gehäuse ausführt, so daß auch ein eventuell vorhandenes größeres Spiel ausgeglichen werden kann.

Zweckmäßigerweise besteht die Bohrung der hinteren Wandung des den Bolzen halternden Gehäuses aus einer Sacklochbohrung.

In weiterer Ausgestaltung der Erfindung ist vorgesehen, daß das den Bolzen halternde Gehäuse aus zwei Gehäusehälften besteht, deren Trennebene durch die Achse der Bohrung verläuft. Die Gehäusehälften können an ihren Trennflächen mit Zapfen und zu diesen komplementären Bohrungen versehen sein, so daß sie sich durch einfaches Zusammenstecken zu dem Gehäuse montieren lassen. Diese Ausgestaltung des Gehäuses ermöglicht eine einfache Halterung und Lagerung des Bolzens durch Einlegen in die Gehäusehälften vor deren Zusammenfügen. Das Gehäuse bzw. die Gehäusehälften bestehen zweckmäßigerweise aus Kunststoff-Spritzgußteilen.

Der Betätigungshebel kann in seiner Verriegelungsstellung in eine Aussparung des Gehäuses einschwenkbar sein, so daß die Oberseite des Gehäuses und der in die Aussparung greifende Betätigungshebel im wesentlichen bündig sind. Zusätzlich können Einrichtungen zur Arretierung des Betätigungshebels in seiner Verriegelungsstellung vorgesehen sein.

Ausführungsbeispiele der Erfindung werden nachstehend anhand der Zeichnung näher erläutert. In dieser zeigt
- Fig. 1: eine Draufsicht auf eine erste Ausführungsform des erfindungsgemäßen Verbindungsbeschlages zum Anschluß zweier plattenförmiger Möbelteile an eine mit einer Durchgangsbohrung versehenen Zwischenwand im zusammengeschobenen, aber noch nicht verriegelten Zustand, teilweise im Schnitt,
- Fig. 2: eine der Fig. 1 entsprechende Darstellung des Beschlages im verriegelten Zustand,
- Fig. 3: eine Ansicht auf die Trennebenen der beiden zu einem topfförmigen Gehäuse zusammenfügbaren Gehäuseteile,
- Fig. 4: eine Vorderansicht des den zapfenförmigen Endbereich des Bolzens aufnehmenden topfförmigen Gehäuses,
- Fig. 5: eine Vorderansicht der beiden Gehäuseteile nach Fig. 3 in ihrer zum Zwecke des Zusammenfügens ausgerichteten Stellung,
- Fig. 6: eine Draufsicht auf den Bolzen mit zapfenförmigem Endbereich und Betätigungshebel,
- Fig. 7: eine Vorderansicht des Bolzens nach Fig. 6,
- Fig. 8: einen Schnitt durch eine zweite Ausführungsform des erfindungsgemäßen Verbindungsbeschlages zum Verbinden zweier rechtwinkelig zueinander stehender Möbelteile und
- Fig. 9: eine Draufsicht auf das den verriegelnden Zapfen aufnehmende topfförmige Gehäuse in Richtung des Pfeils A in Fig. 8.

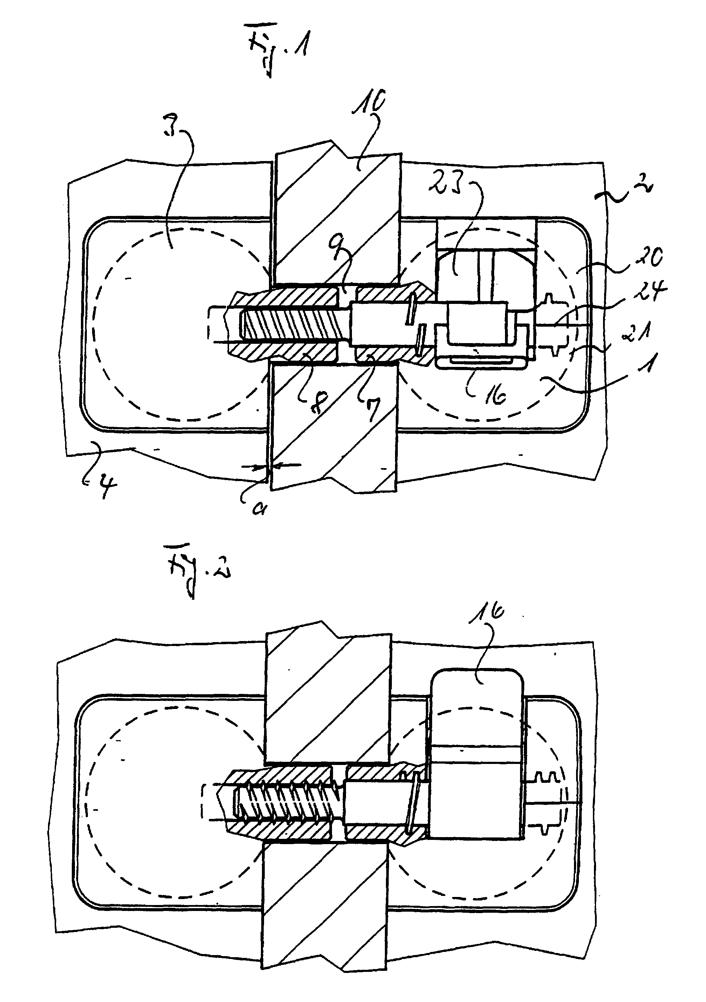

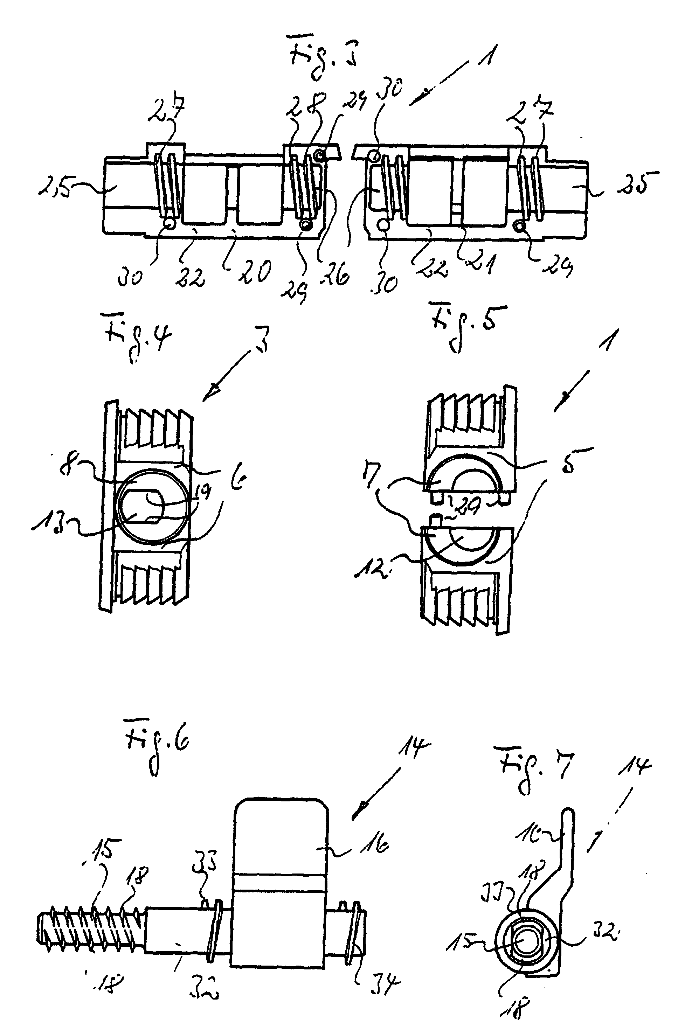

Die aus den Fig. 1 bis 7 ersichtliche erste Ausführungsform des erfindungsgemäßen Verbindungsbeschlages besteht aus einem ersten topfförmigen Gehäuse 1, das in eine flache Sacklochbohrung eines ersten plattenförmigen Möbelteils 2 eingelassen und in dieser verankert ist, und aus einem zweiten topfförmigen Gehäuseteil 3, das in entsprechender Weise in einer flachen Sacklochbohrung eines zweiten plattenförmigen Möbelteils 4 eingelassen ist. Die flachen Sacklochbohrungen beider Möbelteile 2, 4 schneiden deren vorderen schmalen Stirnseiten an, so daß öffnungsspalte entstehen, die durch die abgeflachten Vorderseiten 5, 6 der topfförmigen Gehäuse 1, 3 geschlossen sind. Diese abgeflachten Vorderseiten 5, 6 der Gehäuse sind mit senkrecht auf diesen stehenden zapfenförmigen zylindrischen Fortsätzen 7, 8 versehen, deren Durchmesser dem Durchmesser einer Durchgangsbohrung 9 einer Gehäusewand 10 entspricht. Die zylindrischen Fortsätze 7, 8 sind mit axial verlaufenden Bohrungen 12, 13 versehen. In der Bohrung 12 ist ein Bolzen 14 gehaltert, der mit einem vorderen mit einem schneidenden Gewinde versehenen zapfenförmigen Endbereich 15 und einem radialen Betätigungshebel 16 versehen ist. Der in der aus Fig. 7 ersichtlichen Weise auf gegenüberliegenden Seiten abgeflachte zapfenförmige Endbereich 15 des Bolzens 14 ist in der aus Fig. 1 ersichtlichen Weise in die Bohrung 13 des zweiten topfförmigen Gehäuses mit einem der Hüllkontur des zapfenförmigen Endbereichs entsprechenden Bohrungsprofil einschiebbar. Nachdem die aus Fig. 1 ersichtliche Vormontage durch Zusammenfügen der beiden topfförmigen Gehäuseteile des Verbindungsbeschlages, deren zylindrische Fortsätze 7, 8 in die Durchgangsbohrung 9 der Zwischenwand 10 greifen, erfolgt ist, werden die topfförmigen Gehäuse miteinander und an der Gehäusewand 10 dadurch verriegelt, daß der radiale Betätigungshebel 16 aus seiner aus Fig. 1 ersichtlichen aufrechtstehenden Stellung um 90° in seine aus Fig. 2 ersichtliche Verriegelungsstellung geschwenkt wird, in der er in eine Aussparung auf der Oberseite des topfförmigen Gehäuses 1 greift. Bei dieser Drehung des Bolzens 14 um 90° schneiden die nach der Abflachung des zapfenförmigen Endbereichs stehengebliebenen selbstschneidenen Gewindegänge 18 in die zueinander parallelen Wandungen 19 der Bohrung 13 ein, so daß die Verriegelung bewirkt wird.

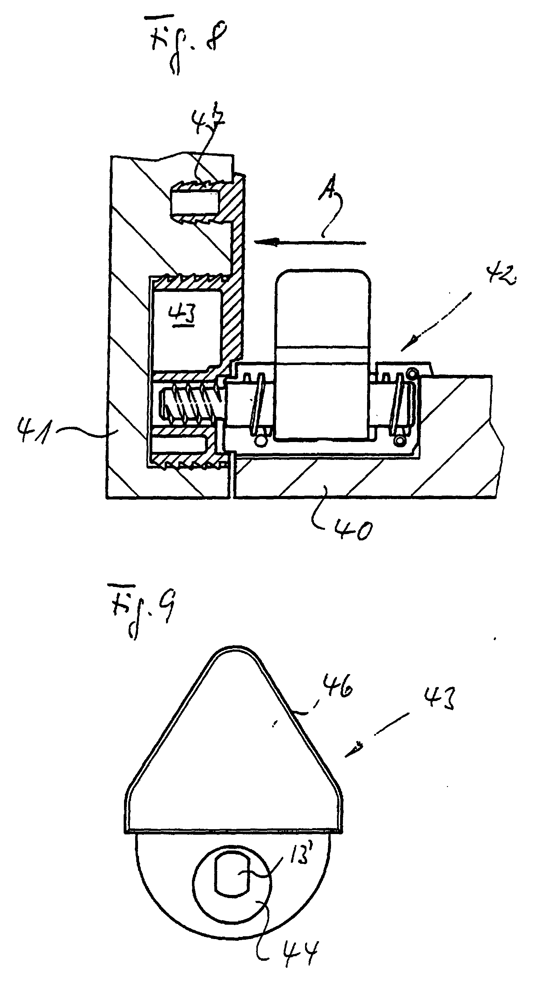

Das Gehäuse 1 ist in der aus den Fig. 3 und 5 ersichtlichen Weise aus zwei Gehäusehälften 20, 21 zusammengesetzt. Das Gehäuse 1 weist eine mittlere, nach oben hin offene und nach unten hin durch einen Boden 22 begrenzte im wesentlichen rechteckige Aussparung 23 auf, die zwischen der vorderen Wand 5 und einer hinteren Wand gebildet ist. Die vordere Wand 5 ist in der bereits beschriebenen Form in ihrem mittleren Bereich mit einem zapfenförmigen zylindrischen Fortsatz 7 versehen. Das Gehäuse 1 ist in seiner Mittelebene 24 mit einer Bohrung versehen, die aus einem vorderen Bohrungsabschnitt 25 und einem hinteren durch eine Wand geschlossenen Bohrungsabschnitt 26 besteht. In die Bohrungsabschnitte 25 und 26 im vorderen und hinteren Teil des Gehäuses 1 sind jeweils in der aus Fig. 3 ersichtlichen Weise zwei Gewindegänge 27, 28 eingearbeitet. Das Gehäuse 1 weist an den in der Mittelebene 24 liegenden Trennebenen Zapfen 29 und entsprechend komplementäre Bohrungen 30 auf, so daß die aus Fig. 3 ersichtlichen Gehäusehälften einfach zu dem aus den Fig. 1 und 2 ersichtlichen Gehäuse 1 zusammengefügt werden können.

Der in dem Gehäuse 1 gehalterte Schaftteil des Bolzens 14 ist mit zwei jeweils etwa nur einmal über den Bolzenumfang verlaufenden Gewindestegen 33, 34 versehen, die im zusammengefügten Zustand des Gehäuses 1 in die Gewindegänge 27, 28 greifen.

Die Aussparung 23 des Gehäuses 1, in der der Betätigungshebel 16 liegt, ist durch seitliche Wandungen begrenzt.

Die topfförmigen Gehäuse 1, 3 sind in der aus den Fig. 4 und 5 ersichtlichen Weise an ihren äußeren zylindrischen Wandungen mit der Halterung dienenden ringförmig umlaufenden Rippen mit Sägezahnprofil versehen.

In dem Gehäuse 1 ist in der aus den Fig. 1 und 2 ersichtlichen Weise der Bolzen 14 gelagert. Der Bolzen 14 besteht aus einem Schaftteil 32 mit den etwa nur einmal über dessen Umfang verlaufenden Gewindestegen 33, 34 und dem diesen nach vorne hin verlängernden zapfenförmigen Endbereich 15 mit auf gegenüberliegenden Seiten abgeflachten selbstschneidenden Gewinde 18. Zwischen den Gewindestegen 33, 34 ist mit dem Schaftteil 32 einstückig der abgekröpfte Betätigungshebel 16 verbunden.

Wird nach dem Zusammenschieben der die Möbelplatten 2, 4 tragenden topfförmigen Gehäuse in die aus Fig. 1 ersichtliche vormontierte Stellung der Betätigungshebel 16 um 90° in die aus Fig. 2 ersichtliche Stellung umgelegt, schneiden die Gewindegänge 18 verriegelnd in die Wandungsteile 19 der Bohrung 13 des topfförmigen Gehäuses 3 ein. Durch dieses Einschneiden werden die zylindrischen Fortsätze 7, 8 in der Durchgangsbohrung 9 aufeinander zubewegt. Dieser Bewegung wird die Einzugsbewegung des Schaftteils 9 überlagert, die sich aus dem Einschrauben der in die Gewindegänge 27, 28 greifenden Gewindestege 33, 34 ergibt. Durch dieses Zusammenziehen verschwindet der in der vormontierten, aus Fig. 1 ersichtlichen Stellung noch vorhandene Spalt a zwischen dem plattenförmigen Teil 4 und der Gehäusewand 10.

Der erfindungsgemäße Verbindungsbeschlag läßt sich in einfacher Weise wieder dadurch lösen, daß der Hebel aus seiner aus Fig. 2 ersichtlichen arretierten Stellung wieder in seine aus Fig. 1 ersichtliche entriegelte Stellung zurückgeschwenkt wird.

Das Ausführungsbeispiel nach den Fig. 8 und 9 unterscheidet sich von dem nach den Fig. 1 bis 7 dadurch, daß die in den Endbereich zweier rechtwinkelig miteinander zu verbindender Möbelplatten 40, 41 eingelassenen topfförmigen Gehäuse 42, 43 unmittelbar miteinander verriegelt werden. Der aus den Fig. 8 und 9 ersichtliche Verbindungsbeschlag eignet sich also beispielsweise dazu, einen Boden oder eine Zwischenwand an einer endseitigen Wand eines Möbels, beispielsweise einer Seitenwand eines Schrankes, zu montieren.

Das den Bolzen lagernde Gehäuse 42 entspricht einschließlich des Bolzens grundsätzlich dem Gehäuse 1 und dem Bolzen 14 nach den Figuren 3 und 5 bis 7, so daß zur Darstellung des Gehäuses 42 und des in diesem gelagerten Bolzens auf die vorstehende Beschreibung Bezug genommen wird.

Das Gehäuse 43 unterscheidet sich von dem Gehäuse 3 im wesentlichen nur dadurch, daß die im zapfenförmigen Endbereich mit selbstschneidendem Gewinde des Bolzens aufnehmende Bohrung 13' sich auf der Oberseite des Gehäuses 43 befindet und in den Grund einer flachen Sacklochbohrung 44 mündet, deren Durchmesser dem Durchmesser des zylindrischen Fortsatzes des Gehäuses 42 entspricht.

Entsprechend der geringeren Tiefe der Sacklochbohrung 44 ist der zylindrische Fortsatz des Gehäuses 42 ebenfalls entsprechend kürzer ausgeführt. Es besteht jedoch auch die Möglichkeit, den zylindrischen Fortsatz 7 des Gehäuses 1 nach dem Ausführungsbeispiel der Fig. 1 bis 7 so kurz auszuführen, daß das topfförmige Gehäuse 1 unverändert auch zur Montage und Verbindung mit dem topfförmigen Gehäuse 43 verwendet werden kann.

In allen Ausführungsbeispielen sind die topfförmigen Gehäuse mit einem die flache Sacklochbohrung übergreifenden flanschartigen Rand versehen. Dieser flanschartige Rand 46 ist bei dem topfförmigen Gehäuse 3 etwa dreieckförmig ausgebildet. Der dreiecksförmige Flansch 46 trägt im Bereich seiner Spitze einen zusätzlichen der Verankerung dienenden dübelförmigen Fortsatz 47.

## Patentansprüche

1. Verbindungsbeschlag zum lösbaren Verbinden von Möbelteilen, bestehend
aus zwei in Aussparungen zweier Möbelteile (2, 3; 40, 41) einsetzbaren und in diesen befestigbaren topfförmigen Gehäusen (1, 3; 42, 43), die in ihren einander zugewandten Wandungen mit in ihrer Montagestellung fluchtenden Bohrungen versehen sind, und
aus einem in der Bohrung (25, 26) des einen topfförmigen Gehäuses (1, 42) gehaltenen und mit einem radialen Betätigungshebel (16) versehenen Bolzen (14), dessen vorderer die Bohrung überragender zapfenförmiger Endbereich (15) in die Bohrung (13) des anderen topfförmigen Gehäuses (3, 43) einführbar und mit schneidenden Gewindestegen (18) derart versehen ist, daß der zapfenförmige Endbereich (15) durch etwa eine Vierteldrehung in der Bohrung (13) des anderen topfförmigen Gehäuses (3, 43) verriegelbar ist.

2. Verbindungsbeschlag nach Anspruch 1, **dadurch gekennzeichnet, daß** die Bohrungen zylindrische Fortsätze (7, 8) der Gehäusewandungen durchsetzen, die voneinander entgegengesetzten Seiten her in eine ihren Durchmessern angepaßte Durchgangsbohrung (9) einer Wand (10) einsetzbar sind, deren Länge etwa gleich oder größer ist als die Summe der Längen der zylindrischen Fortsätze (7, 8).

3. Verbindungsbeschlag nach Anspruch 1 oder 2, **dadurch gekennzeichnet, daß** die zylindrischen Fortsätze (7, 8) an schmalen, mit den Stirnkanten der Möbelbretter (2, 4) fluchtenden Stirnseiten (5, 6) der Gehäuse (1, 3) angeordnet sind.

4. Verbindungsbeschlag nach Anspruch 1, **dadurch gekennzeichnet, daß** die topfförmigen Gehäuse (42, 43) in Aussparungen zweier rechtwinkelig miteinander zu verbindender Möbelteile (40, 41) einsetzbar und unmittelbar miteinander verriegelbar sind.

5. Verbindungsbeschlag nach Anspruch 4, **dadurch gekennzeichnet, daß** nur das den Bolzen (14) halternde Gehäuse (42) mit einem zylindrischen Fortsatz und das andere Gehäuse (43) mit einer komplementären, den zylindrischen Fortsatz aufnehmende Sacklochbohrung (44) versehen ist, in deren Grund die Bohrung (13') mündet.

6. Verbindungsbeschlag nach einem der Ansprüche 1 bis 5, **dadurch gekennzeichnet, daß** der mit einem selbstschneidenden Gewinde (18) versehene zapfenförmige Endbereich (15) des Bolzens (14) auf gegenüberliegenden Seiten abgeflacht und die Bohrung des anderen Gehäuses (3, 43) ein dem Zapfenhüllprofil im wesentlichen entsprechendes rechteckiges Profil aufweist.

7. Verbindungsbeschlag nach einem der Ansprüche 1 bis 6, **dadurch gekennzeichnet, daß** der radiale Hebel (16) einstückig (materialhomogen) mit dem Bolzen (14) ausgebildet ist.

8. Verbindungsbeschlag nach einem der Ansprüche 1 bis 7, **dadurch gekennzeichnet, daß** der radiale Hebel (16) abgekröpft ist.

9. Verbindungsbeschlag nach einem der Ansprüche 1 bis 8, **dadurch gekennzeichnet, daß** das den Bolzen halternde Gehäuse (1, 42) in seinem mittleren Bereich mit einer die Bohrung (25, 26) durchsetzenden, nach außen hin offenen Aussparung (23) versehen ist, in der der radiale Betätigungshebel (16) angeordnet ist.

10. Verbindungsbeschlag nach einem der Ansprüche 1 bis 9, **dadurch gekennzeichnet, daß** die Aussparung (23) die in den diese begrenzenden, gegenüberliegenden Wänden des Gehäuses befindlichen Bohrungsabschnitte (25, 26) unterbricht.

11. Verbindungsbeschlag nach einem der Ansprüche 1 bis 10, **dadurch gekennzeichnet, daß** die beiden Bohrungsabschnitte (25, 26) mit Gewindegängen (27, 28) für Gewindestege (33, 34) des Bolzens (14) versehen sind.

12. Verbindungsbeschlag nach einem der Ansprüche 1 bis 11, **dadurch gekennzeichnet, daß** die Bohrung der hinteren Wandung des Gehäuses (1, 42) eine Sacklochbohrung (26) ist.

13. Verbindungsbeschlag nach einem der Ansprüche 1 bis 12, **dadurch gekennzeichnet, daß** das Gehäuse (1, 42) aus zwei Gehäusehälften (20, 21) besteht, deren Trennebene (24) durch die Achse des Bolzens (14) verläuft.

14. Verbindungsbeschlag nach Anspruch 13, **dadurch gekennzeichnet, daß** die Gehäusehälften (20, 21) an ihren Trennflächen mit Zapfen (29) und komplementären Bohrungen (30) versehen sind.

## Claims

1. A connecting fitting for releasably connecting furniture parts, comprising
two pot-shaped housings (1, 3; 42, 43) to be inserted in recesses of two furniture parts (2, 3; 40, 41) and to be fixed in the same, which in their walls facing each other are provided with bores aligned in their mounting position, and
a bolt (14) held in the bore (25, 26) of the one pot-shaped housing (1, 42) and provided with a radial actuating lever (16), whose front pin-shaped end portion (15) protruding beyond the bore can be introduced into the bore (13) of the other pot-shaped housing (3, 43) and is provided with cutting thread webs (18) such that the pin-shaped end portion (15) can be locked in the bore (13) of the other pot-shaped housing (3, 43) by about a quarter turn.

2. The connecting fitting as claimed in claim 1, **characterized in that** the bores extend through cylindrical projections (7, 8) of the housing walls, which from opposite sides can be inserted in a diameter-adapted through hole (9) of a wall (10) whose length is approximately equal to or larger than the sum of the lengths of the cylindrical projections (7, 8).

3. The connecting fitting as claimed in claim 1 or 2, **characterized in that** the cylindrical projections (7, 8) are disposed on narrow end faces (5, 6) of the housings (1, 3), which are aligned with the front edges of the furniture boards (2, 4).

4. The connecting fitting as claimed in claim 1, **characterized in that** the pot-shaped housings (42, 43) can be inserted in recesses of two furniture parts (40, 41) to be connected with each other at right angles and can directly be locked with each other.

5. The connecting fitting as claimed in claim 4, **characterized in that** only the housing (42) holding the bolt (14) is provided with a cylindrical projection and the other housing (43) is provided with a complementary blind hole (44) receiving the cylindrical projection, the bore (13') opening in the bottom of said blind hole.

6. The connecting fitting as claimed in any of claims 1 to 5, **characterized in that** the pin-shaped end portion (15) of the bolt (14), which is provided with a self-cutting thread (18), is flattened on opposing sides, and the bore of the other housing (3, 43) has a rectangular profile substantially corresponding to the envelope profile of the pin.

7. The connecting fitting as claimed in any of claims 1 to 6, **characterized in that** the radial lever (16) is formed integrally (of homogeneous material) with the bolt (14).

8. The connecting fitting as claimed in any of claims 1 to 7, **characterized in that** the radial lever (16) is bent at right angle.

9. The connecting fitting as claimed in any of claims 1 to 8, **characterized in that** in its middle portion the housing (1, 42) holding the bolt is provided with a recess (23) extending through the bore (25, 26) and open to the outside, in which recess the radial actuating lever (16) is disposed.

10. The connecting fitting as claimed in any of claims 1 to 9, **characterized in that** the recess (23) interrupts the bore portions (25, 26) located in the opposing walls of the housing defining the same.

11. The connecting fitting as claimed in any of claims 1 to 10, **characterized in that** the two bore portions (25, 26) are provided with thread courses (27, 28) for thread webs (33, 34) of the bolt (14).

12. The connecting fitting as claimed in any of claims 1 to 11, **characterized in that** the bore of the rear wall of the housing (1, 42) is a blind hole (26).

13. The connecting fitting as claimed in any of claims 1 to 12, **characterized in that** the housing (1, 42) consists of two housing halves (20, 21), whose parting plane (24) extends through the axis of the bolt (14).

14. The connecting fitting as claimed in claim 13, **characterized in that** at their parting surfaces the housing halves (20, 21) are provided with pins (29) and complementary bores (30).

## Revendications

1. Ferrure d'assemblage pour raccorder de manière à pouvoir les séparer des éléments de meubles, consistant
en deux boîtiers en forme de pot (1, 3 ; 42, 43) pouvant être insérés et fixés dans deux échancrures de deux éléments de meubles (2, 3 ; 40, 41), boîtiers qui dans leurs parois dressées l'une vers l'autre sont équipés d'alésages alignés dans leur position de montage, et
en un boulon (14) tenu dans l'alésage (25, 26) de l'un des boîtiers en forme de pot (1, 42) et pourvu d'un levier d'actionnement radial (16), boulon dont l'extrémité avant en forme de pivot (15) dépassant l'alésage peut être insérée dans l'alésage (13) de l'autre boîtier en forme de pot (3, 43) et est pourvue de nervures de filet tranchantes (18) de manière à ce que la zone d'extrémité en forme de pivot (15) peut être verrouillée dans l'alésage (13) de l'autre boîtier en forme de pot (3, 43) par un quart de tour environ.

2. Ferrure d'assemblage selon la revendication 1, **caractérisée en ce que** les alésages traversent des projections cylindriques (7, 8) des parois de boîtier qui, à partir de côtés réciproquement opposés peuvent être insérés dans un alésage de passage (9) d'une paroi (10) adapté à leurs diamètres, dont la longueur est à peu près égale ou supérieure à la somme des longueurs des projections cylindriques (7, 8).

3. Ferrure d'assemblage selon les revendications 1 ou 2, **caractérisée en ce que** les projections cylindriques (7, 8) sont disposées sur des faces frontales étroites (5, 6) des boîtiers (1, 3) qui sont alignées sur les arêtes frontales des planches de meubles (2, 4).

4. Ferrure d'assemblage selon la revendication 1, **caractérisée en ce que** les boîtiers en forme de pot (42, 43) peuvent être insérés dans des échancrures de deux éléments de meubles (40, 41) à assembler à angle droit et directement verrouillés l'un avec l'autre.

5. Ferrure d'assemblage selon la revendication 4, **caractérisée en ce que** seul le boîtier (42) maintenant le boulon (14) est pourvu d'une projection cylindrique et que l'autre boîtier (43) est pourvu d'un alésage borgne (44) complémentaire recevant la projection cylindrique, dans le fond duquel l'alésage (13') aboutit.

6. Ferrure d'assemblage selon l'une quelconque des revendications 1 à 5, **caractérisée en ce que** la zone d'extrémité en forme de pivot (15) du boulon (14) pourvue d'un filet auto-taraudeur (18) est aplatie sur des côtés opposés et que l'alésage de l'autre boîtier (3, 43) présente un profil rectangulaire correspondant essentiellement au profil de l'enveloppe du pivot.

7. Ferrure d'assemblage selon l'une quelconque des revendications 1 à 6, **caractérisée en ce que** le levier radial (16) est formé d'une pièce (de matériau homogène) avec le boulon (14).

8. Ferrure d'assemblage selon l'une quelconque des revendications 1 à 7, **caractérisée en ce que** le levier radial (16) est coudé.

9. Ferrure d'assemblage selon l'une quelconque des revendications 1 à 8, **caractérisée en ce que** le boîtier (1, 42) maintenant le boulon est pourvu dans sa partie médiane d'une échancrure (23) ouverte vers l'extérieur traversant l'alésage (25, 26), échancrure dans laquelle le levier d'actionnement radial (16) est disposé.

10. Ferrure d'assemblage selon l'une quelconque des revendications 1 à 9, **caractérisée en ce que** l'échancrure (23) interrompt les sections d'alésage (25, 26) délimitant cette dernière et se trouvant dans les parois opposées du boîtier.

11. Ferrure d'assemblage selon l'une quelconque des revendications 1 à 10, **caractérisée en ce que** les deux sections d'alésage (25, 26) sont pourvues de pas de filet (27, 28) pour des nervures du filet (33, 34) du boulon (14).

12. Ferrure d'assemblage selon l'une quelconque des revendications 1 à 11, **caractérisée en ce que** l'alésage de la paroi arrière du boîtier (1, 42) est un alésage borgne (26) .

13. Ferrure d'assemblage selon l'une quelconque des revendications 1 à 12, **caractérisée en ce que** le boîtier (1, 42) consiste en deux moitiés de boîtier (20, 21), dont le plan de séparation (24) s'étend à travers l'axe du boulon (14).

14. Ferrure d'assemblage selon la revendication 13, **caractérisée en ce que** les moitiés de boîtier (20, 21) sont pourvues à leurs surfaces de séparation de pivots (29) et d'alésages complémentaires (30).
